# EUROPEAN PATENT SPECIFICATION

(11) **EP 3 351 120 B1**
(45) Date of publication and mention of the grant of the patent: **17.09.2025**
(21) Application number: 16789357.7
(22) Date of filing: 04.05.2016
(51) Int. Cl.: A23P 20/10, A23L 7/161, A23G 3/34, A23P 20/18

(54) **IMPROVEMENTS TO PATENT P201231330 "METHOD FOR THE TREATMENT OF CORN KERNELS INTENDED FOR THE PRODUCTION OF POPCORN USING MICROWAVE APPLIANCES, AND RESULTING PRODUCT"**
VERBESSERUNGEN AN PATENT P201231330 »VERFAHREN ZUR BEHANDLUNG VON MAISKÖRNERN FÜR DIE HERSTELLUNG VON POPCORN MIT MIKROWELLENVORRICHTUNGEN UND RESULTIERENDES PRODUKT
AMÉLIORATIONS APPORTÉES AU BREVET D'INVENTION P201231330: PROCÉDÉ POUR LE TRAITEMENT DE GRAINS DE MAÏS DESTINÉS À L'OBTENTION DE POPCORNS AU MOYEN D'APPAREILS À MICRO-ONDES, ET PRODUIT AINSI OBTENU

(30) Priority: 07.05.2015 ES 201530621
(43) Date of publication of application: 25.07.2018
(73) Proprietor: Liven, S.A.U., 08197 Sant Cugat del Vallés, Barcelona (ES)
(72) Inventor: GALCERAN MARTORELL, Carlos, 08197 Valldoreix (ES)
(74) Representative: Elzaburu S.L.P.
(86) International application number: PCT/ES2016/070340
(87) International publication number: WO 2016/177926

(56) References cited:
- EP-A2- 0 242 828
- WO-A1-2005/084457
- WO-A1-2011/154398
- CA-A1- 2 882 702
- ES-T3- 2 044 945
- US-A- 3 851 574
- US-A- 4 767 635
- US-A1- 2003 232 119
- US-A1- 2008 145 509

## Description

### OBJECT OF THE INVENTION

The present invention relates to improvements to the invention patent P201231330, published under ES2451592, in which a method is described for the treatment of corn kernels intended for the production of popcorn using microwave appliances, wherein the corn kernel or kernels are coated with a solution of a main product, specifically sunflower lecithin, and a flavoring product as an additive. The object of the invention is to obtain an improved final product (corn kernels coated with an additive and lecithin by carrying out specific steps of the process and incorporating lecithin and the additives or flavors in different ways.

### BACKGROUND OF THE INVENTION

In the method described in the main invention patent P201231330, published under ES2451592, the treatment of the corn kernels intended for the production of popcorn using microwave appliances, the corn is impregnated for a pre-defined time in a solution of a main product, specifically sunflower lecithin, and a flavoring product or additive, which may be sugar, butter, salt, etc.

In other words, in said method, the product produced is healthier than conventional products since it is low-fat and does not contain allergens, thus producing a final crunchy product without clumping, and therefore ensuring that the popcorn ultimately produced are as homogeneous as possible, substituting classic oils used in conventional methods to coat the corn kernel with sunflower lecithin, a product that is much healthier and makes it possible to obtain improved results as commented above.

However, in said method, there is no reference to the form of incorporation and state of the lecithin and additives or flavors, such that it also does not allude to the way of treating said components before impregnating the corn for the coating thereof.

Likewise, it was experimentally verified that sunflower lecithin can be substituted by other ingredients that achieve the same results.

US2008145509 discloses a method for obtaining corn prepared for cooking without the use of fat matter and having one or more sugars selected from a certain group, which allows it to be cooked-mainly in a microwave oven-without the use of fat matter.

CA2882702 discloses a healthier product which contains less fat and no allergens and which, once cooked in a microwave appliance, is crunchy and does not stick together, such that the resulting popcorn is as homogeneous as possible. The corn kernels are coated with sunflower lecithin, a much healthier product.

US2003232119 discloses a method of preparation of sweet microwave popcorn guarantees a finished product, where the presence of sugar does not harden the popcorn and they remain white and tender, without burn over the pack and among the popped kernels inside, homogeneously colored and flavoured, with natural ingredients. The method starts with the preparation of a sugar-glucose syrup made of sugar, water and glucose. The mixture is heated and cooled up to determinate temperature. The next mixture is a fat solution consisted of coconut or palm oil, lecithin and cream or flavouring. The final mixture is made of corn, sugar-glucose syrup and the fat solution. Flavouring like caramel or chocolate and colouring can be added to the sugar-glucose syrup. One of the following ingredients can be added: peanuts, hazelnuts, walnuts, almonds, a caramel or chocolate flavouring.

### DESCRIPTION OF THE INVENTION

The improvements that are mentioned are firstly based on the fact that the sunflower lecithin and the additives or flavours are added together with the corn kernels into a common mixer, in which the outer impregnation of the corn kernels with this lecithin and the additives mixed with them takes place.

Said final mixer used in the coating process present different types of elements for the operation thereof, such as blades, helices, bands, etc., and it is heated depending on the products that require it.

Furthermore, and according to other improvements of the invention, the lecithin and additives are included in the coating solution in liquid state.

According to another improvement, the lecithin and additives are included in the coating solution in solid state.

In another improvement, the lecithin and additives are included in the solution where one is in liquid state and the other is in solid state, indistinctly.

In any case, the liquid additives with the liquid lecithin pass onto a liquid mixer for stirring both components in order to subsequently filter them; in other words, the mixture is passed through sieves that filter the result, preventing lumps or unwanted material from passing through, so that these liquid additives and liquid lecithin as a mixture pass onto the final mixture referred to above.

Furthermore, the liquid lecithin with the liquid additives, as well as the solid lecithin and solid additives is passed onto a mixer together, and from this mixer, the mixture passes onto a kneader, in which a final product is produced that is mixed and sifted, with or without pressure, based on the characteristics of the components, once again passing this kneaded mixture onto the final mixer referred to initially.

In addition, the solid lecithin with the solid additives passes onto a mixer of solids, prior to the pre-mixing process, such that said mixture passes through a sieve to separate the lumps and regulate the size of the particles before reaching the final mixer.

In either case, the corn kernels with lecithin and additives, whether they are liquids, solids, combined or not, are treated in the final mixer to obtain the coating of the corn kernels, thus finally carrying out a weighing and packaging process of the product.

It is worth noting that the additives may be, as mentioned above, any type of flavor, whether they are salts, sweeteners, acidulants, spicy flavors, bitter flavors, fixatives such as food lacquers, food glues, as well as other products such as dyes, binders, thickeners, etc.

Lastly, it should be noted that the coating of the corn kernels is carried out in a number of successive phases, in other words, producing a coating based on several layers, without it affecting the essence of the invention.

A loose kernel is thus produced without lumps, which opens well when popped in the microwave, and all this without added fats and being able to be stored at room temperatures higher than traditional temperatures without altering the organoleptic qualities thereof.

Lastly, it is worth mentioning that the method of the invention is repeated as many times as necessary, in order to produce a product with several layers.

### DESCRIPTION OF THE DRAWINGS

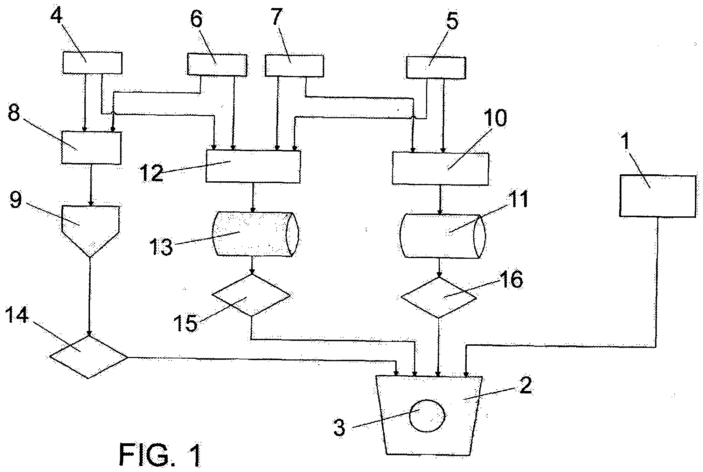

As a complement to the description provided below, and for the purpose of helping to make the characteristics of the invention more readily understandable, in accordance with a preferred practical embodiment thereof, said description is accompanied by a figure, which by way of illustration and not limitation represents the following: Figure 1 shows a representation corresponding to a block diagram of the different possibilities that is carried out in the method object of the improvements of the invention.

### PREFERRED EMBODIMENT OF THE INVENTION

As can be seen in the figure discussed above, the corn kernels (1) are added to a common and final mixer (2) in order to produce a product (3) coated in sunflower lecithin and additives, which are also added to said mixer (2).

These additives are liquid additives (4) and/or solid additives (5), while the lecithin is liquid lecithin (6) and/or solid lecithin (7).

In any case, the liquid additives (4) and the liquid lecithin (6) pass through a pre-stirrer (8) and from this pre-stirrer, they pass onto a mixer of liquids (9); while in the case of solid lecithin (7) and solid additives (5), they pass onto a pre-mixer (10) and from this pre-mixer, onto a mixer of solids (11).

Furthermore, the liquid lecithin (6) and the solid lecithin (7), together with the liquid additives (4) and solid additives (5) are passed through a mixer (12) and from this mixer to a kneader (13).

The resulting mixture in the mixer of liquids (9) is passed through a filter (14) to prevent lumps or unwanted material from passing through, the product produced in the kneader (13) also being passed through a filter (15); while the mixture of solids (11) also passes through a sieve (16) to prevent lumps and regulate the size of the particle, such the product passing through the filter (14) as well as the product passing through the filter (15) and the product passing through the sieve (16) are added to the common mixture (2) together with the corn kernels (1) to be treated, in order to produce the corresponding coating, whether it is from one or more than one layers of coating, based on the specific needs of each case, after which said kernels are weighed and packaged.

## Claims

1. A method for the treatment of corn kernels used to produce popcorn using microwave appliances and resulting product, wherein corn kernels (1) are coated with sunflower lecithin and one or more additives and the sunflower lecithin and one or more additives are added to a common mixer (2) together with the corn kernels (1), and the outer impregnation of the corn kernels (1) occurs into the common mixer (2), the method includes one of the following steps:
• The sunflower lecithin and the additive, both in liquid sate, are incorporated into a liquid mixer (9) after passing through a pre-stirrer (8) to produce a mixture that is filtered in a filter (14) before passing onto the common mixer (2), or
• The sunflower lecithin and the additive, both in solid state, are passed onto a pre-mixer (10) and afterwards, are passed onto a solid mixer (11) to obtain a mixture, that is sifted in a sieve (16) before being added to the common mixer (2), or
• The sunflower lecithin in the liquid state, the sunflower lecithin in the solid state, the additive in the liquid state and the additive in the solid state are passed together onto a mixer (12) and sent from the mixer (12) onto a kneader (13) to obtain the product (3), that is subjected to filtering (15) before passing onto the common mixer (2),
• Previous steps are repeated as many times as necessary, in order to produce a product with several layers.

2. The method according to claim 1, wherein the sunflower lecithin and the additive are included in the coating solution in a liquid state.

3. The method according to claim 1, wherein the sunflower lecithin and the additive are included in the coating solution in a solid state.

4. The method according to claim 1, wherein the sunflower lecithin is included in the coating solution in a liquid state and the additive is included in the coating solution in a solid state.

5. The method of claim 1, wherein the sunflower lecithin is included in the coating solution in a solid state, and the additive is included in the coating solution in a liquid state.

6. The method according to any one of claims 1 to 5, wherein the additives is formed from the following: flavoring agents and/or fixing agents, such as food lacquers or food glues, and/or dyes, and/or binders and/or thickening agents.

7. The method according to claim 6, wherein the flavoring agents is formed from the following: salt, sweetener, acidulant, spicy flavor, bittering flavor.

## Patentansprüche

1. Verfahren zur Behandlung von Maiskörnern, die zur Herstellung von Popcorn unter Verwendung von Mikrowellenvorrichtungen verwendet werden, und resultierendes Produkt, wobei Maiskörner (1) mit Sonnenblumenlecithin und einem oder mehreren Zusatzstoffen beschichtet werden und das Sonnenblumenlecithin und ein oder mehrere Zusatzstoffe zusammen mit den Maiskörnern (1) in einen gemeinsamen Mischer (2) gegeben werden, und die äußere Imprägnierung der Maiskörner (1) in dem gemeinsamen Mischer (2) erfolgt, wobei das Verfahren einen der folgenden Schritte beinhaltet:
• Das Sonnenblumenlecithin und der Zusatzstoff, beide im flüssigen Zustand, werden nach dem Passieren eines Vorrührers (8) in einen Flüssigmischer (9) eingearbeitet, um eine Mischung zu erzeugen, die in einem Filter (14) gefiltert wird, bevor sie auf den gemeinsamen Mischer (2) gelangt, oder
• Das Sonnenblumenlecithin und der Zusatzstoff, beide im festen Zustand, werden auf einen Vormischer (10) gegeben und danach auf einen Feststoffmischer (11) gegeben, um eine Mischung zu erhalten, die in einem Sieb (16) gesiebt wird, bevor sie dem gemeinsamen Mischer (2) zugegeben wird, oder
• Das Sonnenblumenlecithin im flüssigen Zustand, das Sonnenblumenlecithin im festen Zustand, der Zusatzstoff im flüssigen Zustand und der Zusatzstoff im festen Zustand werden zusammen auf einen Mischer (12) gegeben und von dem Mischer (12) auf einen Kneter (13) geschickt, um das Produkt (3) zu erhalten, das einer Filterung (15) unterzogen wird, bevor es den gemeinsamen Mischer (2) passiert,
• Vorhergehende Schritte werden so oft wie nötig wiederholt, um ein Produkt mit mehreren Schichten herzustellen.

2. Verfahren nach Anspruch 1, wobei das Sonnenblumenlecithin und der Zusatzstoff in der Beschichtungslösung in einem flüssigen Zustand beinhaltet sind.

3. Verfahren nach Anspruch 1, wobei das Sonnenblumenlecithin und der Zusatzstoff in der Beschichtungslösung in einem festen Zustand beinhaltet sind.

4. Verfahren nach Anspruch 1, wobei das Sonnenblumenlecithin in der Beschichtungslösung in einem flüssigen Zustand beinhaltet ist und der Zusatzstoff in der Beschichtungslösung in einem festen Zustand beinhaltet ist.

5. Verfahren nach Anspruch 1, wobei das Sonnenblumenlecithin in der Beschichtungslösung in einem festen Zustand beinhaltet ist und der Zusatzstoff in der Beschichtungslösung in einem flüssigen Zustand beinhaltet ist.

6. Verfahren nach einem der Ansprüche 1 bis 5, wobei die Zusatzstoffe aus Folgendem gebildet sind: Aromastoffen und/oder Fixiermitteln, wie Lebensmittellacken oder Lebensmittelklebern, und/oder Farbstoffen und/oder Bindemitteln und/oder Verdickungsmitteln.

7. Verfahren nach Anspruch 6, wobei die Aromastoffe aus Folgendem gebildet sind: Salz, Süßungsmittel, Säuerungsmittel, scharfem Geschmack, bitterem Geschmack.

## Revendications

1. Procédé de traitement de grains de maïs destinés à la production de pop-corn au moyen d'appareils à micro-ondes, et produit ainsi obtenu, dans lequel les grains de maïs (1) sont enrobés de lécithine de tournesol et d'un ou plusieurs additifs, la lécithine de tournesol et un ou plusieurs additifs sont ajoutés à un mélangeur commun (2) avec les grains de maïs (1), et l'imprégnation externe des grains de maïs (1) se produit dans le mélangeur commun (2), le procédé comporte l'une des étapes suivantes :
• La lécithine de tournesol et l'additif, tous deux à l'état liquide, sont incorporés dans un mélangeur liquide (9) après passage dans un pré-agitateur (8) pour produire un mélange qui est filtré dans un filtre (14) avant d'être passé vers le mélangeur commun (2), ou
• La lécithine de tournesol et l'additif, tous deux à l'état solide, sont passés dans un pré-mélangeur (10) et ensuite, sont passés dans un mélangeur solide (11) pour obtenir un mélange, qui est tamisé dans un tamis (16) avant d'être ajouté au mélangeur commun (2), ou
• La lécithine de tournesol à l'état liquide, la lécithine de tournesol à l'état solide, l'additif à l'état liquide et l'additif à l'état solide sont introduits ensemble sur un mélangeur (12) et envoyés du mélangeur (12) vers un malaxeur (13) afin d'obtenir le produit (3), qui est soumis à une filtration (15) avant d'être transféré vers mélangeur commun (2),
• Les étapes précédentes sont répétées autant de fois que nécessaire, afin d'obtenir un produit à plusieurs couches.

2. Procédé selon la revendication 1, dans lequel la lécithine de tournesol et l'additif sont inclus dans la solution d'enrobage à l'état liquide.

3. Procédé selon la revendication 1, dans lequel la lécithine de tournesol et l'additif sont inclus dans la solution d'enrobage à l'état solide.

4. Procédé selon la revendication 1, dans lequel la lécithine de tournesol est incluse dans la solution d'enrobage à l'état solide, et l'additif est inclus dans la solution d'enrobage à l'état liquide.

5. Procédé selon la revendication 1, dans lequel la lécithine de tournesol est inclus dans la solution d'enrobage à l'état solide, et l'additif est inclus dans la solution d'enrobage à l'état liquide.

6. Procédé selon l'une quelconque des revendications 1 à 5, dans lequel les additifs sont formés à partir des éléments suivants : agents aromatisants et/ou agents fixateurs, tels que des laques alimentaires ou des colles alimentaires, et/ou colorants, et/ou liants et/ou agents épaississants.

7. Procédé selon la revendication 6, dans lequel les agents aromatisants sont formés à partir des éléments suivants : sel, édulcorant, acidifiant, arôme épicé, arôme amer.
